# EUROPÄISCHE PATENTSCHRIFT

(11) **EP 0 961 876 B1**
(45) Veröffentlichungstag und Bekanntmachung des Hinweises auf die Patenterteilung: **19.01.2005**
(21) Anmeldenummer: 98963456.3
(22) Anmeldetag: 14.11.1998
(51) Int. Cl.: F02D 41/02, F01N 3/08

(54) **VERFAHREN ZUM BETREIBEN EINES DIESELMOTORS**
METHOD FOR RUNNING A DIESEL ENGINE
PROCEDE POUR L'EXPLOITATION D'UN MOTEUR DIESEL

(30) Priorität: 04.12.1997 DE 19753718
(43) Veröffentlichungstag der Anmeldung: 08.12.1999
(60) Teilanmeldung: 04026635.5
(73) Patentinhaber: DaimlerChrysler AG, 70546 Stuttgart (DE)
(72) Erfinder: DUVINAGE, Frank, D-73230 Kirchheim (DE); FAUSTEN, Hans, D-73650 Winterbach (DE); FEKETE, Nicholas, D-70734 Fellbach (DE); KERCKHOFF, Anton, D-70374 Stuttgart (DE); KRUTZSCH, Bernd, D-73770 Denkendorf (DE); LIEBSCHER, Thomas, D-70736 Fellbach (DE); PISCHINGER, Stefan, D-52076 Aachen (DE); WEIBEL, Michel, D-70619 Stuttgart (DE)
(86) Internationale Anmeldenummer: PCT/EP1998/007293
(87) Internationale Veröffentlichungsnummer: WO 1999/030021

(56) Entgegenhaltungen:
- EP-A- 0 560 991
- EP-A- 0 732 485
- DE-C- 19 607 151
- DE-C- 19 716 275

## Beschreibung

Die Erfindung betrifft ein Verfahren zum Betreiben eines Dieselmotors mit einer Motorregelung, die in Abhängigkeit von Kennfeldern den Betrieb des Dieselmotors regelt und eine Fett/Mager-Regelung des Dieselmotors ermöglicht.

Um die Schadstoffemission eines Dieselmotors zu reduzieren, werden diese z.B. mit einer von den Abgasen des Dieselmotors durchströmten Abgasreinigungsanlage betrieben. Zur Reinigung können NOₓ-Adsorbersysteme verwendet werden, die sich durch ein hohes Potential an NOₓ-Speicherfähigkeit auszeichnen. Derartige, auch als NOₓ-Adsorberkatalysatoren bezeichnete Abgasreinigungsanlagen speichern unter bestimmten Voraussetzungen die Stickoxide (NOₓ) von Verbrennungskraftmaschinen, sofern diese "mager" betrieben werden. Ein Mager-Betrieb liegt vor, wenn das Verbrennungs-Luftverhältnis Lambda (λ) größer als 1 ist, das heißt wenn eine überstöchiometrische Verbrennung vorliegt, bei der Restsauerstoff im Abgas vorhanden ist. Zur Regeneration derartiger, aufgrund ihrer Speicherfähigkeit auch als Speicherkatalysator bezeichneten NOₓ-Adsobersysteme wird reduzierend wirkendes Abgas mit möglichst hohem Reduktionsmittelgehalt benötigt, damit das im NOₓ-Adsorberkatalysator gespeicherte NOₓ freigesetzt und zu Stickoxid N₂ umgesetzt werden kann. Eine Verbrennungskraftmaschine produziert reduzierend wirkendes Abgas, wenn eine "fette" Verbrennung, das heißt eine unterstöchiomentrische Verbrennung mit λ<1 vorliegt, bei der kein oder nur noch wenig Restsauerstoff im Abgas vorhanden ist.

Dieselmotoren arbeiten im gesamten Kennfeldbereich in folge des heterogenen Gemischbildungsverfahrens mit Sauerstoffüberschuß (λ>1). Um bei Dieselmotoren ein NOₓ-Adsorbersystem zur Reinigung der Dieselmotorabgase verwenden zu können, muß auch der Dieselmotor zeitweise auf Fett-Betrieb umgestellt werden können, das heißt der Dieselmotor muß Betriebsphasen aufweisen, in denen eine unterstöchiometrische Verbrennung mit λ<1 vorliegt.

Aus der DE 43 34 763 A1 ist ein Verfahren zum Betreiben einer Brennkraftmaschine bekannt, wobei in einer Abgasreinigungsanlage eine Adsorbtionseinrichtung für Stickoxide (NOₓ) angeordnet ist, die NOₓ adsorbiert, wenn das Verbrennungsluftverhältnis Lambda mager ist (λ>1) und adsorbiertes NOₓ freisetzt, wenn das Verbrennungsluftverhältnis fett wird (λ<1). Bei diesem bekannten Verfahren wird die Temperatur der NOₓ-Adsorbtionseinrichtung durch Einspritzen von Brennstoff in das Abgas erhöht und durch Einblasen von Luft in das Abgas gesenkt, um die Arbeitstemperatur der NOₓ-Speichereinrichtung innerhalb eines festgelegten Bereiches zu halten.

Aus der DE 195 43 219 C1 ist ein Verfahren der eingangs genannten Art bekannt, bei dem stromab des Speicherkatalysators ein Sensor zur Erfassung der NOₓ-Konzentration im Abgasstrom angeordnet ist, der bei Erreichen eines kennfeldmäßig in Abhängigkeit von Drehzahl und Motorlast variierenden NOₓ-Speicher-Schwellwertes ein Umschalten von einem Betrieb des Dieselmotors mit λ>1 auf einen Betrieb mit λ<1 auslöst, um im Fett-Betrieb des Dieselmotors (λ<1) den Speicherkatalysator zu regenerieren. Zu diesem Zweck umfaßt beim bekannten Verfahren eine Motorregelung einen Rechner, der in Abhängigkeit von vorbestimmten Umschaltkriterien ein Umschalten auf Fett- oder Mager-Betrieb des Dieselmotors bewirkt, und eine mit dem Rechner kommunizierende Sensorik, die für Umschaltkriterien notwendige Parameter überwacht, sowie einen mit dem Rechner kommunizierenden Speicher, in dem die Kennfelder für den Betrieb des Dieselmotors gespeichert sind.

Aus der DE 19 607 151 C1 ist ein Verfahren zur Regeneration eines NOx-Speicherkatalysators bekannt, bei dem in Abhängigkeit von einer Grenzmenge von NOx-Verbindungen, die vom NOx-Speicherkatalysator ausgegeben wird, eine Regenerationsphase gestartet wird. Dabei ist vorgesehen, den Beladungszustand des NOx-Speicherkatalysators während der Regenerationsphase zu überprüfen und die Regenerationsphase zu unterbrechen, wenn der Beladungszustand unter eine Mindestbeladung fällt.

Ein Dieselmotor wird üblicherweise derart betrieben, daß sich eine maximale Leistungsentfaltung bei minimalem Kraftstoffverbrauch ergibt. Zusätzlich werden weitere Randbedingungen, wie Abgasemissionswerte, Rauchentwicklung und Laufruhe, bei der Abstimmung des Motorbetriebes berücksichtigt. Die genannten Anforderungen haben zur Folge, daß ein Dieselmotor üblicherweise für den Mager-Betrieb optimiert ist. Dieser Optimal-Betrieb des Dieselmotors muß bei einem Abgasreinigungssystem mit einem Speicherkatalysator zeitweise für einen Fett-Betrieb unterbrochen werden, während dem der Adsorberkatalysator regeneriert wird.

Die vorliegende Erfindung beschäftigt sich mit dem Problem, ein Verfahren der eingangs genannten Art dahingehend auszugestalten, daß sich das Gesamt-Betriebsverhalten des Dieselmotors unter Berücksichtigung der sich abwechselnden Phasen von Mager-Betrieb und Fett-Betrieb verbessert und welches einen besonders wirkungsvollen und einfach zu steuernden Mager-Fett-Wechselbetrieb zum effektiven Einsatz eines Speicherkatalysatorelementes ermöglicht.

Dieses Problem wird erfindungsgemäß durch ein Verfahren mit den Merkmalen des Patentanspruches 1 gelöst. Die Merkmale der Unteransprüche geben vorteilhafte Aus- und Weiterbildungen der Erfindung an.

Die Erfindung beruht auf dem allgemeinen Gedanken, spezielle Umschaltkriterien für ein Umschalten von Mager-Betrieb auf Fett-Betrieb des Dieselmotors sowie spezielle Umschaltkriterien für ein Zurückschalten von Fett-Betrieb auf Mager-Betrieb vorzusehen, wobei ein Umschalten auf den hinsichtlich des Motorbetriebes ungünstigeren Fett-Betrieb nur dann erfolgt, wenn sämtliche diesbezüglich vorgesehenen Umschaltkriterien erfüllt sind und ein Zurückschalten auf den hinsichtlich des Motorbetriebsverhaltens günstigeren Mager-Betrieb bzw. ein Abbruch des Fett-Betriebes bereits dann erfolgt, wenn bereits eines der diesbezüglich vorgesehenen Umschaltkriterien erfüllt ist. Mit Hilfe dieser Maßnahmen ist es möglich, die Umschaltkriterien derart zu wählen, daß einerseits ein Fett-Betrieb des Dieselmotors nur dann erfolgt, wenn dies für die Regeneration des Adsorbersystems notwendig ist, und daß andererseits der Fett-Betrieb nur solange erfolgt, wie er zur Regeneration des Adsorbersystems erforderlich ist, und/oder der Fett-Betrieb beendet bzw. unterbrochen wird, wenn dies für die Aufrechterhaltung eines bestimmten Motorbetriebsverhaltens erforderlich ist.

Als spezielles Umschaltkriterium für ein Umschalten von Mager- auf Fett-Betrieb des Dieselmotors dient beim erfindungsgemäßen Verfahren die Einhaltung einer Regenerationstemperatur eines von den Abgasen des Dieselmotors durchströmten Speicherkatalysatorelementes. Durch die Einhaltung der Regenerationstemperatur des Speicher- oder Adsorbtionskatalysators kann die Regenerationszeit und somit die Dauer der Fett-Betriebs-Phase verkürzt werden, da der Speicherkatalysator nur oberhalb einer bestimmten Temperatur die Fähigkeit besitzt, adsorbiertes NOₓ freizusetzen und gleichzeitig dieses in molekularen Stickstoff N₂ umzusetzen.

Entsprechend einer Weiterbildung des erfindungsgemäßen Verfahrens kann zur Überwachung der Regenerationstemperatur ein Temperatursensor verwendet werden, der vor dem Einlaß des Speicherkatalysatorelementes im Abgasstrang angeordnet ist und mit der Sensorik kommuniziert, wobei die Regenerationstemperatur, bei der ein Umschalten auf den Fett-Betrieb erfolgen kann, vorzugsweise in einem vorbestimmten Temperaturbereich liegt.

Bei einer besonderen Ausbildung der Abgasreinigungseinrichtung des Dieselmotors kann dem Speicherkatalysator-Element ein sauerstoffverbrauchendes Katalysatorelement, insbesondere ein Oxidationskatalysator vorgeschaltet sein. Bei einer zweckmäßigen Ausgestaltung des erfindungsgemäßen Verfahrens kann bei einem derart aufgebauten Konvertersystem der Temperatursensor zwischen dem Speicherkatalysatorelement und dem sauerstoffverbrauchenden Katalysatorelement angeordnet sein, wodurch neben der Überwachung der Regenerationstemperatur auch eine Überwachung der Energiefreisetzung in Folge der exothermen Reaktionen im sauerstoffverbrauchenden Katalysatorelement durchgeführt werden kann.

Als weiteres Umschaltkriterium, das für ein Umschalten von Mager- auf Fett-Betrieb des Dieselmotors erfüllt sein muß, dient beim erfindungsgemäßen Verfahren das Vorliegen eines bestimmten Beladungszustandes eines von den Abgasen des Dieselmotors durchströmten Speicherkatalysator-Elementes. Diese Maßnahme verhindert zu häufiges Umschalten auf den Fett-Betrieb, wodurch sich das Gesamt-Betriebsverhalten des Dieselmotors erheblich verbessert. Um den Beladungszustand des Speicherkatalysators zu erfassen, können mehrere Maßnahmen durchgeführt werden.

Bei einer bevorzugten Ausführungsform des erfindungsgemäßen Verfahrens kann der Beladungszustand des Speicherkatalysatorelementes mit Hilfe von Kennfeldern erfaßt werden, in denen das Speichervermögen des Speicherkatalysator-Elementes in Abhängigkeit von dessen Temperatur und Beladungszustand und die Abgasemissionswerte des Dieselmotors in Abhängigkeit des Motorbetriebszustandes abgelegt sind. Mit Hilfe dieser Kennfelder wird ausgehend von einem Anfangs-Beladungszustand zu Beginn einer Mager-Betriebs-Phase die Zunahme der Beladung pro Zeiteinheit bestimmt und der jeweils aktuelle Beladungszustand errechnet.

Vorteilhafterweise können bei einer Weiterbildung des erfindungsgemäßen Verfahrens NOₓ-Sensoren vorgesehen sein, die mit der Sensorik kommunizieren und im Abgasstrang vor und nach dem Speicherkatalysatorelement angeordnet sind und mit deren Hilfe zur Bestimmung des Beladungszustandes des Speicherkatalysatorelementes die von diesem adsorbierte NOₓ-Menge überwachen.

Bei einer anderen Ausführungsform des erfindungsgemäßen Verfahrens ist zur Bestimmung des Beladungszustandes des Speicherkatalysators ein NOₓ-Sensor vorgesehen, der mit der Sensorik kommuniziert und im Abgasstrang nach dem Speicherkatalysatorelement angeordnet ist und die aus dem Speicherkatalysator-Element austretende NOₓ-Menge überwacht. Dabei wird dem vorbestimmten Beladungszustand, bei dem eine Umschaltung auf den Fett-Betrieb erfolgen soll, ein vorbestimmter Maximalwert für die detektierte NOₓ-Menge zugeordnet.

Bei einer besonders vorteilhaften Ausführungsform des erfindungsgemäßen Verfahrens dient als Umschaltkriterium für ein Umschalten von Mager- auf Fett-Betrieb des Dieselmotors das Vorliegen eines stationären oder quasistationären Motorbetriebszustandes. Mit Hilfe dieser Maßnahme ist es möglich, das Betriebsverhalten des Dieselmotors während seines Fett-Betriebes relativ einfach an das entsprechende Betriebsverhalten während des Mager-Betriebes anzugleichen, so daß z.B. hinsichtlich der Leistungsentfaltung des Dieselmotors vom Fahrer in der Regel keine Veränderung bemerkt wird.

Bei einer Weiterbildung des erfindungsgemäßen Verfahrens können zur Erkennung eines stationären oder quasistationären Motorbetriebszustandes mit Hilfe der Sensorik Signalwerte überwacht werden, die mit der Motordrehzahl und/oder mit der Pedalstellung und/oder mit der Einspritzmenge und/oder mit der Abgastemperatur, beispielsweise vor dem Einlaß eines Abgasturboladers und/oder mit dem Motordrehmoment und/oder mit der Motorlast korrelieren. Dabei wird vorzugsweise auf die der elektronischen Motorsteuerung bzw. Motorregelung ohnehin zur Verfügung stehenden Signale bezüglich Motordrehzahl und Pedalstellung zurückgegriffen. Als Anhaltspunkt für einen stationären oder quasistationären Motorbetriebszustand kann die momentan herrschende Motorleistung bzw. Motorlast dienen, die z.B. anhand der aktuellen Einspritzmenge und der aktuellen Motordrehzahl bestimmt werden kann. Eine wirkungsvolle Aussage über den Zustand des Motors ist auch mit Hilfe eines Sensors möglich, der das Motordrehmoment detektiert.

Zweckmäßigerweise erkennt die Motorregelung bei einer Ausgestaltung des erfindungsgemäßen Verfahrens das Vorliegen eines stationären oder quasistationären Motorbetriebszustandes, wenn Änderungen der überwachten Signale während vorbestimmter Zeiteinheiten vorbestimmte Schwellwerte nicht übersteigen.

Außerdem dient beim erfindungsgemäßen Verfahren als zusätzliches oder alternatives Umschaltkriterium für ein Zurückschalten von Fett- auf Mager-Betrieb des Dieselmotors der Ablauf einer Regenerationszeit, die in Abhängigkeit von dem jeweiligen Beladungszustand des von den Abgasen des Dieselmotors durchströmten Speicherkatalysatorelementes (27) zu Beginn der Fett-Betriebsphase vorgegeben ist.

Die jeweilige Regenerationszeit, innerhalb der eine nahezu vollständige Freisetzung und Umsetzung der gespeicherten Stickoxide erreicht werden kann, ist vom jeweiligen Motorbetriebszustand des Dieselmotors abhängig. Bei Kenntnis der sich in diesem Motorbetriebszustand während einer Fett-Betriebs-Phase einstellenden Abgaszusammensetzung hinsichtlich der Reduktionsmittel Kohlenmonoxid (CO) und Kohlenwasserstoffe (HC) sowie des Beladungszustandes des Speicherkatalysators im Zeitpunkt der Umschaltung auf den Fett-Betrieb des Motors ergibt sich für jeden Motorbetriebszustand aus dem vorliegenden Abgasvolumenstrom und aus den entsprechenden chemischen Reaktionsgleichungen eine relativ genaue Zeitvorgabe, innerhalb der die für die vollständige Regeneration des Speicherkatalysators erforderliche Menge bzw. Masse an Reduktionsmitteln bereitgestellt werden kann. Vorzugsweise wird bei einer Weiterbildung des erfindungsgemäßen Verfahrens die Regenerationszeit des Speicherkatalysatorelementes mit Hilfe von Kennfeldern bestimmt, in denen die Regenerationszeit in Abhängigkeit des Motorbetriebszustandes und des Beladungszustandes des Speicherkatalysators abgelegt ist.

Des weiteren dient beim erfindungsgemäßen Verfahren als zusätzliches oder alternatives Umschaltkriterium für ein Zurückschalten von Fett- auf Mager-Betrieb des Dieselmotors das Vorliegen eines vorbestimmten Entladungszustandes eines von den Abgasen des Dieselmotors durchströmten Speicherkatalysator-Elementes. Dabei kann bei einer zweckmäßigen Ausgestaltung dieses Verfahrens der Entladungszustand des Speicherkatalysators wiederum mit Hilfe von Kennfeldern überwacht werden, in denen die Regenerationszeit für ein Speicherkatalysator-Element in Abhängigkeit des Motorbetriebszustandes und des Beladungszustandes des Speicherkatalysators abgelegt sind.

Entsprechend einer besonders zweckmäßigen Ausführungsform des erfindungsgemäßen Verfahrens wird der aktuelle Beladungszustand während des Mager-Betriebes und des Fett-Betriebes dadurch bestimmt, daß einerseits der Beladungszustand zu Beginn einer Mager-Betriebs-Phase aus dem Beladungszustand zu Beginn einer Fett-Betriebs-Phase abzüglich der insbesondere kennfeldmäßig zugeordneten Entladung während der Fett-Betriebs-Phase ermittelt wird und daß andererseits der Beladungszustand zu Beginn einer Fett-Betriebs-Phase aus dem Beladungszustand zu Beginn einer Mager-Betriebs-Phase zuzüglich der insbesondere kennfeldmäßig zugeordneten Beladung während der Mager-Betriebs-Phase ermittelt wird, wobei für die Beladung und Entladung entsprechende Kennfelder vorgesehen sind.

Als weiteres oder alternatives Umschaltkriterium für ein Zurückschalten von Fett- auf Mager-Betrieb des Dieselmotors dient beim erfindungsgemäßen Verfahren das Vorliegen eines vorbestimmten Reduktionsmittelgehaltes in den Abgasen nach einem Speicherkatalysator-Element. Mit dieser Maßnahme kann ein Durchbruch von Reduktionsmitteln durch den Speicherkatalysator festgestellt werden. Zu einem solchen Durchbruch an Reduktionsmittel kommt es dann, wenn nach vollständiger Desorbtion und Umsetzung der gespeicherten Stickoxide der Dieselmotor weiterhin im Fett-Betrieb arbeitet. Ein derartiger Reduktionsmitteldurchbruch wird beispielsweise dann angenommen, wenn ein vorbestimmter Schwellwert für die HC-Emission und/oder CO-Emission des Speicherkatalysators überschritten wird, wobei dieser Schwellwert entsprechend dem Verhältnis von Kohlenmonoxid zu Kohlenwasserstoffen im Abgas des Dieselmotors bei dessen Fett-Betrieb vorzugsweise in Kennfeldern festgelegt ist.

Um den Reduktionsmittelgehalt der Abgase nach dem Speicherkatalysator festzustellen, kann entsprechend einer Weiterbildung des erfindungsgemäßen Verfahrens im Abgasstrang nach dem Speicherkatalysator wenigstens ein Reduktionsmittelsensor angeordnet sein, der als HC-Sensor oder als CO-Sensor oder als Lambda-Sonde ausgebildet ist.

Bei einem Dieselmotor mit einem Konvertersystem, dessem Speicherkatalysator ein DeNOₓ-Katalysatorelement nachgeschaltet ist, kann bei einer zweckmäßigen Ausführungsform der Reduktionsmittelsensor zwischen dem Speicherkatalysatorelement und diesem DeNOₓ-Katalysatorelement angeordnet sein.

Darüber hinaus dient beim erfindungsgemäßen Verfahren als zusätzliches oder alternatives Umschaltkriterium für ein Zurückschalten von Fett- auf Mager-Betrieb des Dieselmotors das Vorliegen einer Abgastemperatur, die unterhalb eines vorbestimmten Schwellwertes liegt. Zur Detektion der Abgastemperatur kann entsprechend einer Weiterbildung ein Temperatursensor vorgesehen sein, der vor einem von den Abgasen durchströmten Speicherkatalysatorelement im Abgasstrang angeordnet ist und mit der Sensorik kommuniziert.

Eine derartige Ausgestaltung ist insbesondere dann von Vorteil, wenn das dem Dieselmotor nachgeschaltete Konvertersystem ein vor dem Speicherkatalysator angeordnetes sauerstoffverbrauchendes Katalysatorelement aufweist. Wenn die in diesem sauerstoffverbrauchenden Katalysatorelement ablaufenden exothermen Reaktionen eine Temperaturerhöhung verursachen, derart, daß die Abgastemperatur im Eintrittsbereich des Speicherkatalysators einen bestimmten Grenzwert überschreitet, ist die thermische Stabilität des Katalysators und weiterer Motorbauteile gefährdet, so daß ein Zurückschalten in den Mager-Betrieb erforderlich ist. In diesem Fall wird der Temperatursensor vorzugsweise zwischen dem Speicherkatalysatorelement und dem diesem vorgeschalteten sauerstoffverbrauchenden Katalysatorelement angeordnet.

Entsprechend einer Weiterbildung des erfindungsgemäßen Verfahrens dient als Umschaltkriterium für ein Zurückschalten von Fett- auf Mager-Betrieb des Dieselmotors das Vorliegen eines instationären Motorbetriebszustandes. Insbesondere können zur Erkennung des instationären Motorbetriebszustandes mit Hilfe der Sensorik wiederum Signale überwacht werden, die mit der Motordrehzahl und/oder der Pedalstellung und/oder der Einspritzmenge und/oder der Abgastemperatur, vorzugsweise vor dem Einlaß eines Abgasturboladers, und/oder der Motordrehzahl und/oder der Motorlast korrelieren. Vorzugsweise erkennt bei einer derartigen Ausgestaltung des erfindungsgemäßen Verfahrens die Motorsteuerung das Vorliegen eines instationären Motorbetriebszustandes, wenn Änderungen der überwachten Signalwerte während vorbestimmter Zeiteinheiten vorbestimmte Schwellwerte überschreiten.

Bei einer besonders vorteilhaften Ausführungsform eines Verfahrens nach der Erfindung, bei dem ein Umschalten in den Fett-Betrieb erfolgen kann, wenn ein stationärer oder quasistationärer Motorbetriebszustand vorliegt, und bei dem ein Zurückschalten in den Mager-Betrieb erfolgt, wenn ein instationärer Motorbetriebszustand vorliegt, kann vorgesehen sein, daß die zur Feststellung eines instationären Motorbetriebszustandes vorbestimmten Zeiteinheiten und Schwellwerte sich von den vorbestimmten Zeiteinheiten und Schwellwerten zur Feststellung eines stationären oder quasistationären Motorbetriebszustandes unterscheiden. Diese Maßnahme ermöglicht eine optimale Anpassung der Umschaltkriterien sowohl an einen hohen Fahrkomfort als auch an ein ökonomisches und ökologisches Betriebsverhalten des Motors.

Weitere wichtige Merkmale und Vorteile ergeben sich aus den Unteransprüchen, der Zeichnung und aus der nachfolgenden Figurenbeschreibung eines bevorzugten Ausführungsbeispieles anhand der Zeichnung.

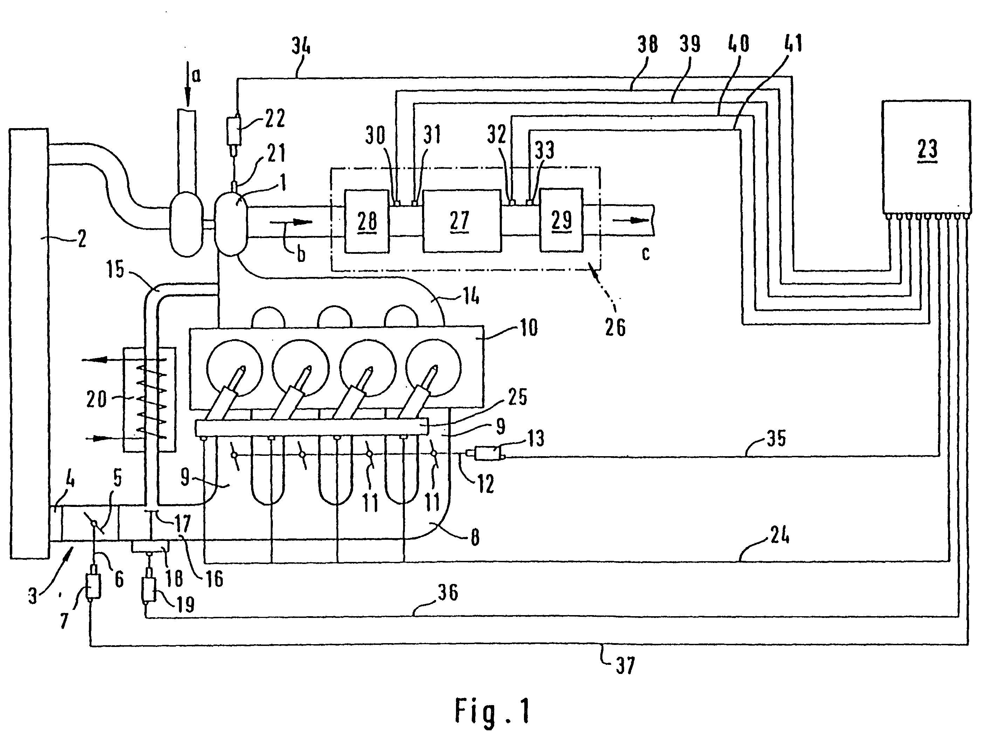

Es zeigt
- Fig. 1: eine schematische Anordnung eines Dieselmotors mit Abgasrückführung, Abgasturbolader, Abgasreinigungseinrichtung und einer Motorsteuerung nebst zugehörigen Leitungen, die einzelne Aggregate mit der Motorsteuerung verbinden.

Entsprechend Fig. 1 saugt ein Abgasturbolader 1 auf seiner Verdichtereintrittsseite Frischluft entsprechend dem Pfeil a an, diese durchströmt bei entsprechend erhöhtem Druck einen Wärmetauscher 2 und erreicht eine Drosselstelle 3 in der Ansaugleitung 4.

In der Drosselstelle 3 ist eine Drosselklappe 5 angeordnet, die über ein Stellglied 6 von einem hilfskraftbetätigten Stellantrieb 7 betätigbar ist. Nach der Drosselstelle 3 durchquert die Frischluft zunächst ein Saugrohr 16 und erreicht dann eine Luftsammelkammer 8, von wo aus sie über separate Ansaugtrakte 9 den Brennbereichen des Dieselmotors 10 zugeführt wird. In den Ansaugtrakten 9 sind jeweils einzelne Drosselklappen 11 angeordnet, die entsprechend dem Ausführungsbeispiel über ein gemeinsames Stellglied 12 von einem hilfskraftbetätigten Stellantrieb 13 betätigbar sind.

Stromab des Motors 10 werden die während der Verbrennung gebildeten Abgase in einer Abgassammelkammer 14 gesammelt und zum Teil der Turbineneintrittsseite des Abgasturboladers 1 zugeführt. Außerdem kommuniziert die Abgassammelkammer 14 mit einer Abgasrückführungsleitung 15, die im Saugrohr 16, das heißt nach der Drosselstelle 3 und vor der Luftsammelkammer 8 in der Luftansaugleitung 4 mündet.

Im Mündungsbereich der Abgasrückführungsleitung 15 ist im Saugrohr 16 ein Ventil 17 angeordnet, das über ein Stellglied 18 von einem hilfskraftbetätigten Stellantrieb 19 betätigbar ist. Im dargestellten Ausführungsbeispiel steht die Abgasrückführungsleitung 15 mit einem Wärmetauscher 20 im Wärmeaustausch, so daß gegebenenfalls eine Kühlung des rückgeführten Abgases erreicht werden kann.

Der Turbineneintrittsquerschnitt und/oder der die Turbine durchströmende Abgasvolumenstrom ist mit Hilfe eines Stellgliedes 21 veränderbar, das von einem hilfskraftbetätigten Stellantrieb 22 betätigbar ist. Nach dem Durchströmen der Turbine des Abgasturboladers 1 wird das Abgas entsprechend dem Pfeil b einem Abgasreinigungssystem oder Konvertersystem 26 zugeleitet. Entsprechend Pfeil c wird das gereinigte Abgas z.B. durch einen nicht gezeigten Auspuff in die Umgebung abgeführt.

Das Konvertersystem 26 besteht aus einem Adsorber- oder Speicherkatalysatorelement 27, einem diesem vorgeschalteten sauerstoffverbrauchenden Katalysatorelement 28, das vorzugsweise als Oxidationskatalysator ausgebildet ist, und aus einem dem NOₓ-Adsorberkatalysator 27 nachgeschalteten DeNOₓ-Katalysatorelement 29. Das Konvertersystem 26 besteht somit aus mehreren Teilelementen 27, 28 und 29, in denen unterschiedliche chemische Reaktionen ablaufen. Die Teilelemente 27, 28 und 29 können derart angeordnet sein, daß sich der Oxidationskatalysator 28 relativ dicht vor dem Adsorberkatalysator 27 befindet, während sich der DeNOₓ-Katalysator 29 relativ weit vom Adsorberkatalysator 27 entfernt befindet. Auf diese Weise kann die Temperatur der Abgase auf ihrem Strömungsweg vom Adsorberkatalysator 27 zum DeNOₓ-Katalysator 29 absinken bzw. abgesenkt werden.

Ein Oxidationskatalysator 28 wird verwendet, um den restlichen Sauerstoffgehalt aus den Dieselabgasen zu entziehen. Dies bewirkt im Mager-Betrieb des Dieselmotors, daß die Speicherfähigkeit des Adsorberkatalysators 27 für NOₓ erhöht wird, da keine Speicherkapazität durch die ungewollte Speicherung von Sauerstoff (O₂) verloren geht. Der Oxidationskatalysator 28 ist jedoch auch für den Fett-Betrieb hilfreich. Denn aufgrund der heterogenen Gemischbildung im Dieselmotor sind auch bei einem unterstöchiometrischen Gesamtverbrennungsluftverhältnis (λ < 1) die Dieselabgase nicht vollkommen sauerstofffrei. Im Fett-Betrieb bewirkt der Oxidationskatalysator 28 daher eine Steigerung der Regenerationsgeschwindigkeit. Außerdem kann durch die im Oxidationskatalysator 28 ablaufende exotherme oder wärmeenergiefreisetzende Reaktion die Betriebstemperatur des Adsorberkatalysators 27 früher erreicht werden.

Ein DeNOₓ-Katalysator 29 wird verwendet, um in Betriebszuständen, in denen der Adsorberkatalysator 27 nicht ordnungsgemäß arbeitet, den Adsorberkatalysator 27 durchströmende, nicht adsorbierte Stickoxide NOₓ zu reduzieren. Derartige Betriebszustände, in denen der Adsorberkatalysator 27 nicht optimal funktioniert, sind z.B. dann gegeben, wenn das zugeführte Abgas außerhalb des Betriebstemperaturbereichs des Adsorptionskatalysators 27 liegt oder wenn der Adsorptionskatalysator 27 zu einem hohen Grad gesättigt ist. Um durch den Adsorberkatalysator 27 "durchschlagendes" NOₓ zu reduzieren, sind im DeNOₓ-Katalysator 29 Reduktionsmittel gespeichert, die zur Reduktion der Stickoxide freigesetzt werden können. Die Aufladung des DeNOₓ-Katalysator 29 kann z.B. während des Fett-Betriebes innermotorisch erfolgen, wenn die entsprechenden Reduktionsmittel gegen Ende der Regenerationsphase des Adsorberkatalysators 27 vermehrt diesen durchdringen. Ebenso kann z.B. über eine spezielle Kraftstoffeinspritzung eine außermotorische Reduktionsmittelzufuhr realisiert werden.

Im Abgasstrom sind zwischen dem Oxidationskatalysator 28 und dem Adsorberkatalysator 27 ein Temperatursensor 30 sowie ein erster NOₓ-Sensor 31 angeordnet. Zwischen dem Adsorptionskatalysator 27 und dem DeNOₓ-Katalysator 29 sind ein zweiter NOₓ-Sensor 32 sowie ein HC-Sensor 33 im Abgasstrom angeordnet.

Der Dieselmotor wird von einer Motorsteuerung oder Motorregelung 23 gesteuert bzw. geregelt, wozu diese über Leitungen mit den entsprechenden Aggregaten des Dieselmotors 10 verbunden ist. Beispielsweise ist in der Fig. 1 eine Leitung 24 dargestellt, welche die Motorregelung 23 mit einer Einspritzanlage 25 des Dieselmotors 10 verbindet. Weitere Leitungen 34, 35, 36 und 37 verbinden die Motorregelung 23 mit den Stellantrieben 22, 13, 19 und 7. Darüber hinaus kommuniziert die Motorregelung 23 über Verbindungsleitungen 38, 39, 40 und 41 mit dem Temperatursensor 30, mit den NOₓ-Sensoren 31 und 32 sowie mit dem HC-Sensor 33. Außerdem kommuniziert die Motorregelung 23 mit einer nicht dargestellten Sensorik, die mit Hilfe von Sensoren verschiedene Parameter des Dieselmotors 10, insbesondere des Konvertersystems 26 detektiert.

In der Motorregelung 23 ist ein Rechner oder Mikroprozessor sowie ein damit kommunizierender Speicher integriert. In diesem Speicher sind zum einen Kennfelder für den Mager-Betrieb des Dieselmotors 10 zum anderen aber auch Kennfelder für den Fett-Betrieb des Dieselmotors 10 abgespeichert. Über einen Softwareschalter wird festgelegt, nach welchen Kennlinien der Dieselmotor 10 von der Motorregelung 23 geregelt werden soll. Die Stellung des Softwareschalters richtet sich dabei nach Umschaltkriterien, deren Vorliegen vom Rechner ständig überprüft wird. Der Rechner kann zur Überwachung der Umschaltkriterien einerseits auf Signale bzw. Signalwerte zurückgreifen, die ohnehin in der Motorregelung vorhanden sind, wie z.B. Motordrehzahl, Gaspedalstellung. Andererseits können zur Überwachung anderer Umschaltkriterien zusätzliche Signale bzw. Signalwerte berücksichtigt werden.

Beispielsweise wird der Temperatursensor 30 dazu verwendet, die Abgastemperatur vor dem Einlaß des Speicherkatalysatorelementes 27 zu messen. Ein Umschaltkriterium für ein Umschalten auf den Fett-Betrieb kann daher z.B. die Einhaltung einer bestimmten Regenerationstemperatur sein, die im Speicherkatalysator 27 vorliegen muß. Über den Temperatursensor 30 kann aber auch eine Grenztemperatur festgestellt werden, bei der ein Zurückschalten auf den Mager-Betrieb erforderlich ist, weil beispielsweise Temperaturen im Bereich der thermischen Belastungsgrenze des Speicherkatalysators 27 und anderer Motorbauteile erreicht wird. Außerdem gestattet der Temperatursensor 30 ein gezieltes Zuheizen über exotherme Reaktionen im Oxidationskatalysator 28, um den Adsorberkatalysator 27 möglichst rasch auf eine optimale Betriebstemperatur zu bringen.

Mit Hilfe der NOₓ-Sensoren 31 und 32, die beiderseits des Speicherkatalysators 27 im Abgasstrang angeordnet sind, läßt sich auf besonders einfache Weise der jeweils aktuelle Beladezustand des Speicherkatalysators 27 ermitteln.

Der HC-Sensor 33 im Auslaßbereich des Speicherkatalysators 25 dient zur Detektion von Reduktionsmitteln, die aus dem Adsorberkatalysator 27 austreten. Übersteigt die im Abgasstrom nach dem Adsorberkatalysator 27 vorhandene Reduktionsmittelmenge einen vorbestimmten Schwellwert, bedeutet dies für den Fett-Betrieb, daß der Speicherkatalysator 27 vollständig regeneriert ist, oder für den Mager-Betrieb, daß ein Funktionsfehler im Speicherkatalysator 27 vorliegt. Anstelle eines HC-Sensors können zusätzlich oder alternativ auch andere Reduktionsmittelsensoren vorgesehen sein, wie z.B. ein CO-Sensor oder eine Lambda-Sonde.

## Patentansprüche

1. Verfahren zum Betreiben eines Dieselmotors mit einer Motorregelung, die in Abhängigkeit von Kennfeldern den Betrieb des Dieselmotors regelt und eine Fett/Mager-Regelung des Dieselmotors ermöglicht, mit folgenden Merkmalen:
. die Motorregelung (23) umfasst
- einen Rechner, der in Abhängigkeit von vorbestimmten Umschaltkriterien ein Umschalten auf Fett- oder Mager-Betrieb des Dieselmotors (10) bewirkt,
- eine mit dem Rechner kommunizierende Sensorik, die für Umschaltkriterien notwendige Parameter überwacht, und
- einen mit dem Rechner kommunizierenden Speicher, in dem die Kennfelder für den Betrieb des Dieselmotors (10) gespeichert sind, wobei
der Rechner ein Umschalten von Mager- auf Fett-Betrieb bewirkt, wenn alle folgenden Umschaltkriterien erfüllt sind:
- die Einhaltung einer Regenerationstemperatur eines von den Abgasen des Dieselmotors (10) durchströmten Speicherkatalysatorelementes (27) und
- das Vorliegen eines bestimmten Beladungszustandes des von den Abgasen des Dieselmotors (10) durchströmten Speicherkatalysatorelementes (27),
**dadurch gekennzeichnet,**
**dass** der Rechner ein Zurückschalten von Fett- auf Mager-Betrieb bewirkt, wenn zumindest eines der folgenden Umschaltkriterien erfüllt ist:
- der Ablauf einer Regenerationszeit, die in Abhängigkeit von dem jeweiligen Beladungszustand des von den Abgasen des Dieselmotors (10) durchströmten Speicherkatalysatorelementes (27) zu Beginn der Fett-Betriebsphase vorgegeben ist;
- das Vorliegen eines vorbestimmten Reduktionsmittelgehaltes in den Abgasen nach dem Speicherkatalysatorelement (27);
- das Vorliegen einer Abgastemperatur unterhalb eines vorbestimmten Schwellwertes oder
- das Vorliegen eines instationären Motorbetriebszustands.

2. Verfahren nach Anspruch 1,
**dadurch gekennzeichnet,**
**dass** als weiteres Umschaltkriterium, das für ein Umschalten von Mager- auf Fett-Betrieb des Dieselmotors (10) ebenfalls erfüllt sein muss, das Vorliegen eines stationären oder quasistationären Motorbetriebszustands dient.

3. Verfahren nach Anspruch 2,
**dadurch gekennzeichnet,**
**daß** zur Erkennung eines stationären oder quasistationären Motorbetriebszustandes und/oder eines instationären Motorbetriebszustandes mit Hilfe der Sensorik Signalwerte überwacht werden für Motordrehzahl und/oder Gaspedalstellung und/oder Einspritzmenge und/oder Abgastemperatur, insbesondere vor dem Einlaß eines Abgasturboladers (1), und/oder Motordrehmoment und/oder Motorlast.

4. Verfahren nach Anspruch 3,
**dadurch gekennzeichnet,**
- **daß** die Motorregelung (23) das Vorliegen eines stationären oder quasistationären Motorbetriebszustandes erkennt, wenn Änderungen der überwachten Signalwerte während vorbestimmter Zeiteinheiten vorbestimmte Schwellwerte nicht übersteigen, und/oder
- **daß** die Motorregelung (23) das Vorliegen eines instationären Motorbetriebszustandes erkennt, wenn Änderungen der überwachten Signalwerte während vorbestimmter Zeiteinheiten vorbestimmte Schwellwerte übersteigen.

5. Verfahren nach Anspruch 4,
**dadurch gekennzeichnet,**
**daß** die zur Feststellung eines instationären Motorbetriebszustandes vorbestimmten Zeiteinheiten und Schwellwerte sich von den vorbestimmten Zeiteinheiten und Schwellwerten zur Feststellung eines stationären oder quasistationären Motorbetriebszustandes unterscheiden.

6. Verfahren nach einer der Ansprüche 1 bis 5,
**dadurch gekennzeichnet,**
**daß** zur Überwachung der Regenerationstemperatur ein Temperatursensor (30) verwendet wird, der vor dem Einlaß des Speicherkatalysatorelementes (27) im Abgasstrang angeordnet ist und mit der Sensorik kommuniziert.

7. Verfahren nach Anspruch 6,
**dadurch gekennzeichnet,**
**daß** zur Überwachung der Regenerationstemperatur der Temperatursensor (30) zwischen dem Speicherkatalysatorelement (27) und einem diesem im Abgasstrom vorgeschalteten sauerstoffverbrauchenden Katalysatorelement (28) angeordnet ist, das insbesondere als Oxidationskatalysator ausgebildet ist.

8. Verfahren nach einem der Ansprüche 1 bis 7,
**dadurch gekennzeichnet,**
**daß** der Beladungszustand des Speicherkatalysatorelementes (27) mit Hilfe von Kennfeldern erfaßt wird, in denen das Speichervermögen des Speicherkatalysatorelementes (27) in Abhängigkeit von dessen Temperatur und Beladungszustand und die Abgasemissionswerte des Dieselmotors (10) in Abhängigkeit des Motorbetriebszustandes abgelegt sind.

9. Verfahren nach Anspruch 8,
**dadurch gekennzeichnet,**
**daß** zur Bestimmung des Beladungszustandes des Speicherkatalysatorelementes (27) NOₓ-Sensoren (31) und (32) vorgesehen sind, die mit der Sensorik kommunizieren und im Abgasstrang vor und nach dem Speicherkatalysatorelement (27) angeordnet sind, mit deren Hilfe die vom Speicherkatalysator (27) adsorbierte NO_{X}-Menge überwacht wird.

10. Verfahren nach einem der Ansprüche 1 bis 7,
**dadurch gekennzeichnet,**
**daß** zur Bestimmung des Beladungszustandes des Speicherkatalysatorelementes (27) ein NOₓ-Sensor (32) vorgesehen ist, der mit der Sensorik kommuniziert und im Abgasstrang nach dem Speicherkatalysatorelement (27) angeordnet ist und die aus dem Speicherkatalysatorelement (27) austretende NOₓ-Menge überwacht, wobei ein vorbestimmter Maximalwert für die detektierte NOₓ-Menge dem vorbestimmten Beladungszustand, bei dem das Umschalten erfolgt, zugeordnet wird.

11. Verfahren nach einem der Ansprüche 1 bis 10,
**dadurch gekennzeichnet,**
**daß** die Regenerationszeit des Speicherkatalysatorelementes (27) mit Hilfe von Kennfeldern festgelegt wird, in denen die Regenerationszeit in Abhängigkeit des Motorbetriebszustandes und des Beladungszustandes des Speicherkatalysatorelementes (27) abgelegt ist.

12. Verfahren nach einem der Ansprüche 1 bis 11,
**dadurch gekennzeichnet,**
**daß** der Entladungszustand des Speicherkatalysatorelementes (27) mit Hilfe von Kennfeldern überwacht wird, in denen die Regenerationszeit für ein Speicherkatalysatorelement (27) in Abhängigkeit des Motorbetriebszustandes und des Beladungszustandes des Speicherkatalysatorelementes (27) abgelegt ist.

13. Verfahren nach einem der Ansprüche 1 bis 12,
**dadurch gekennzeichnet,**
**daß** sich der Beladungszustand des Speicherkatalysatorelementes (27) zu Beginn einer Mager-Betriebs-Phase aus dem Beladungszustand zu Beginn einer Fett-Betriebs-Phase abzüglich der Entladung während der Fett-Betriebs-Phase ergibt und daß sich der Beladungszustand zu Beginn einer Fett-Betriebs-Phase aus dem Beladungszustand zu Beginn einer Mager-Betriebs-Phase zuzüglich der Beladung während der Mager-Betriebs-Phase ergibt, wobei für die Beladung und Entladung entsprechende Kennfelder vorgesehen sind.

14. Verfahren nach einem der Ansprüche 1 bis 13,
**dadurch gekennzeichnet,**
**daß** zur Überwachung des Reduktionsmittelgehaltes im Abgasstrang nach dem Speicherkatalysatorelement wenigstens ein Reduktionsmittelsensor (33) angeordnet ist, der als HC-Sensor oder als CO-Sensor oder als Lambda-Sonde ausgebildet ist.

15. Verfahren nach Anspruch 14,
**dadurch gekennzeichnet,**
**daß** zur Überwachung des Reduktionsmittelgehaltes der Reduktionsmittelsensor (33) zwischen dem Speicherkatalysatorelement (27) und einem diesem nachgeschalteten DeNOₓ-Katalysatorelement (29) angeordnet ist.

16. Verfahren nach einem der Ansprüche 1 bis 15,
**dadurch gekennzeichnet,**
**daß** zur Überwachung das Abgastemperatur ein Temperatursensor (30) vorgesehen ist, der vor einem von den Abgasen durchströmten Speicherkatalysatorelement (27) im Abgasstrom angeordnet ist und mit der Sensorik kommuniziert.

17. Verfahren nach Anspruch 16,
**dadurch gekennzeichnet,**
**daß** zur Überwachung der Abgastemperatur der Temperatursensor (30) zwischen dem Speicherkatalysatorelement (27) und einem diesem im Abgasstrom vorgeschalteten sauerstoffverbrauchenden Katalysatorelement (28) angeordnet ist, das insbesondere als Oxidationskatalysator ausgebildet ist.

## Claims

1. Method for the operation of a diesel engine with a closed loop engine control which controls the operation of the diesel engine in dependence on characteristic maps and permits a rich/lean control of the diesel engine, with the following features:
- the closed loop engine control (23) comprises:
- a computer initiating a switch-over to rich or lean operation of the diesel engine in dependence on predetermined switch-over criteria,
- a sensor system communicating with the computer and monitoring the parameters required for the switch-over criteria, and
- a memory communicating with the computer, in which the characteristic maps for the operation of the diesel engine (10) are stored, wherein
the computer initiates a switch-over from lean to rich operation, if all of the following switch-over criteria are fulfilled:
- maintenance of a regeneration temperature of a storage catalyst element (27) through which the exhaust gases of the diesel engine (10) flow, and
- existence of a defined charge state of the storage catalyst element (27) through which the exhaust gases of the diesel engine (10) flow,
**characterised in that**
the computer initiates a switch-back from rich to lean operation if at least one of the following switch-over criteria is fulfilled:
- expiry of a regeneration time predetermined at the start of the rich operating phase in dependence on the charge state of the storage catalyst element (27) through which the exhaust gases of the diesel engine (10) flow;
- existence of a predetermined reducing agent content in the exhaust gases downstream of the storage catalyst element (27);
- existence of an exhaust gas temperature below a predetermined threshold value; or
- existence of a transient engine operating state.

2. Method according to claim 1,
**characterised in that**
a further switch-over criterion which has to be fulfilled for a switch-over from lean to rich operation of the diesel engine (10) is the existence of a steady or quasi-steady engine operating state.

3. Method according to claim 2,
**characterised in that**
in order to identify a steady or quasi-steady engine operating state and/or a transient engine operating state, signal values are monitored with the aid of the sensor system for engine speed and/or accelerator pedal position and/or amount of fuel injected, and/or exhaust gas temperature, in particular at the inlet of a turbocharger (1), and/or engine torque and/or engine load.

4. Method according to claim 3,
**characterised in that**
- the closed loop engine control (23) identifies the existence of a steady or quasi-steady engine operating state if changes in the monitored signal values do not exceed predetermined threshold values during predetermined units of time, and/or **in that**
- the closed loop engine control (23) identifies the existence of a transient engine operating state if changes in the monitored signal values exceed predetermined threshold values during predetermined units of time.

5. Method according to claim 4
**characterised in that**
the predetermined units of time and threshold values for the identification of a transient engine operating state differ from the predetermined units of time and threshold values for the identification of a steady or quasi-steady engine operating state.

6. Method according to any of claims 1 to 5,
**characterised in that**
the regeneration temperature is monitored by a temperature sensor (30) located in the exhaust gas line upstream of the inlet of the storage catalyst element (27) and communicating with the sensor system.

7. Method according to claim 6,
**characterised in that**
the regeneration temperature is monitored by a temperature sensor (30) located between the storage catalyst element (27) and an oxygen-consuming catalyst element (28) designed in particular as an oxidising converter, which is located upstream thereof in the exhaust gas flow.

8. Method according to any of claims 1 to 7,
**characterised in that**
the charge state of the storage catalyst element (27) is detected with the aid of characteristic maps in which the storage capacity of the storage catalyst element (27) is stored in dependence on its temperature and charge state and the emission values of the diesel engine (10) are stored in dependence on the engine operating state.

9. Method according to claim 8,
**characterised in that**
NOx sensors (31) and (32) communicating with the sensor system and located upstream and downstream of the storage catalyst element (27) in the exhaust gas line, by means of which the NOx amount absorbed by the storage catalyst element (27) is monitored, are provided to determine the charge state of the storage catalyst element (27).

10. Method according to any of claims 1 to 7,
**characterised in that**
a NOx sensor (32) communicating with the sensor system and located downstream of the storage catalyst element (27) in the exhaust gas line and monitoring the NOx amount discharged from the storage catalyst element (27) is provided to determine the charge state of the storage catalyst element (27), with a predetermined maximum value for the detected NOx amount being assigned to the predetermined charge state at which a switch-over is initiated.

11. Method according to any of claims 1 to 10,
**characterised in that**
the regeneration time of the storage catalyst element (27) is determined with the aid of characteristic maps in which the regeneration time is stored in dependence on the engine operating state and on the charge state of the storage catalyst element (27).

12. Method according to any of claims 1 to 11,
**characterised in that**
the discharge state of the storage catalyst element (27) is monitored with the aid of characteristic maps in which the regeneration time for a storage catalyst element (27) is stored in dependence on the engine operating state and on the charge state of the storage catalyst element (27).

13. Method according to any of claims 1 to 12,
**characterised in that**
the charge state of the storage catalyst element (27) at the start of a lean operating phase results from of the charge state at the start of a rich operating phase minus the discharge during the rich operating phase, and **in that** the charge state at the start of a rich operating phase results from the charge state at the start of a lean operating phase plus the charge during the lean operating phase, with suitable characteristic maps being provided for charge and discharge.

14. Method according to any of claims 1 to 13,
**characterised in that**
the reducing agent content in the exhaust gas line is monitored by a least one reducing agent sensor (33) located downstream of the storage catalyst element and designed as HC sensor or as CO sensor or as oxygen sensor.

15. Method according to claim 14,
**characterised in that**
the reducing agent content is monitored by a reducing agent sensor (33) located between the storage catalyst element (27) and a DeNOx catalyst element (29) located downstream thereof.

16. Method according to any of claims 1 to 15,
**characterised in that**
the exhaust gas temperature is monitored by a temperature sensor (30) located upstream of a storage catalyst element (27) through which the exhaust gases flow and communicating with the sensor system.

17. Method according to claim 16,
**characterised in that**
the exhaust gas temperature is monitored by a temperature sensor (30) located between the storage catalyst element (27) and an oxygen-consuming catalyst element (28) located upstream thereof in the exhaust gas flow, which is in particular designed as an oxidising converter.

## Revendications

1. Procédé pour l'exploitation d'un moteur diesel avec une régulation de moteur qui régule le fonctionnement du moteur diesel en fonction de diagrammes caractéristiques et permet une régulation riche/pauvre du moteur diesel, présentant les caractéristiques suivantes :
- la régulation de moteur (23) comprend
- un calculateur, qui provoque une commutation en régime riche ou pauvre du moteur diesel (10) en fonction de critères de commutation prédéterminés,
- un ensemble de capteurs communiquant avec le calculateur, qui surveille les paramètres nécessaires pour les critères de commutation, et
- une mémoire communiquant avec le calculateur, dans laquelle les diagrammes caractéristiques pour le fonctionnement du moteur diesel (10) sont stockés,
- le calculateur provoquant une commutation du régime pauvre au régime riche lorsque tous les critères de commutation suivants sont remplis :
- le respect d'une température de régénération d'un élément de catalyseur à accumulation (27) traversé par les gaz d'échappement du moteur diesel (10) et
- l'existence d'un état de charge déterminé de l'élément de catalyseur à accumulation (27) traversé par les gaz d'échappement du moteur diesel (10),
**caractérisé en ce que**
le calculateur commande une commutation inverse du régime riche au régime pauvre lorsqu'au moins un des critères de commutation suivants est rempli :
- l'expiration d'un temps de régénération qui est prédéterminé en fonction de l'état de charge respectif de l'élément de catalyseur à accumulation (27), traversé par les gaz d'échappement du moteur diesel (10), au commencement de la phase de régime riche ;
- la présence d'une teneur prédéterminée en agents réducteurs dans les gaz d'échappement après l'élément de catalyseur à accumulation (27) ;
- l'existence d'une température des gaz d'échappement inférieure à une valeur de seuil prédéterminée ; et
- l'existence d'un état de marche non stationnaire du moteur.

2. Procédé selon la revendication 1, **caractérisé en ce que** l'existence d'un régime de marche stationnaire ou quasi stationnaire du moteur fait office de critère de commutation supplémentaire, qui doit également être rempli pour une commutation du régime pauvre au régime riche du moteur diesel (10).

3. Procédé selon la revendication 2, **caractérisé en ce que**, pour reconnaître un état de fonctionnement stationnaire ou quasi stationnaire du moteur et/ou un état de fonctionnement non stationnaire du moteur, on surveille des valeurs de signaux à l'aide de capteurs pour la vitesse de rotation du moteur et/ou la position de la pédale des gaz et/ou la quantité injectée et/ou la température des gaz d'échappement, en particulier avant l'entrée d'un turbocompresseur à gaz d'échappement (1), et/ou le couple du moteur et/ou la charge du moteur.

4. Procédé selon la revendication 3, **caractérisé en ce que**
- la régulation de moteur (23) reconnaît l'existence d'un état de fonctionnement stationnaire ou quasi stationnaire du moteur lorsque des variations des valeurs de signaux surveillées ne dépassent pas des valeurs de seuil prédéterminées pendant des unités de temps prédéterminées, et/ou
- la régulation de moteur (23) reconnaît l'existence d'un état de fonctionnement non stationnaire du moteur lorsque des variations des valeurs de signaux surveillées dépassent des valeurs de seuil prédéterminées pendant des unités de temps prédéterminées.

5. Procédé selon la revendication 4, **caractérisé en ce que** les unités de temps et les valeurs de seuil prédéterminées pour la reconnaissance d'un état de fonctionnement non stationnaire du moteur diffèrent des unités de temps et des valeurs de seuil prédéterminées pour la reconnaissance d'un état de fonctionnement stationnaire ou quasi stationnaire du moteur.

6. Procédé selon l'une quelconque des revendications 1 à 5, **caractérisé en ce que**, pour la surveillance de la température de régénération, on utilise un capteur de température (30) qui est placé dans le courant des gaz d'échappement avant l'entrée de l'élément de catalyseur à accumulation (27) et qui communique avec les capteurs.

7. Procédé selon la revendication 6, **caractérisé en ce que**, pour la surveillance de la température de régénération (30), le capteur de température est placé entre l'élément de catalyseur à accumulation (27) et un élément de catalyseur (28) consommant de l'oxygène installé avant celui-ci dans le courant des gaz d'échappement, et qui constitue en particulier un catalyseur d'oxydation.

8. Procédé selon l'une quelconque des revendications 1 à 7, **caractérisé en ce que** l'on détecte l'état de charge de l'élément de catalyseur à accumulation (27) à l'aide de diagrammes caractéristiques, dans lesquels sont stockées la capacité d'accumulation de l'élément de catalyseur à accumulation (27) en fonction de sa température et de son état de charge et les valeurs d'émission de gaz d'échappement du moteur diesel (10) en fonction de l'état de fonctionnement du moteur.

9. Procédé selon la revendication 8, **caractérisé en ce que**, pour la détermination de l'état de charge de l'élément de catalyseur à accumulation (27), il est prévu des détecteurs de NOₓ (31) et (32), qui communiquent avec les capteurs et qui sont disposés dans le courant des gaz d'échappement et après l'élément de catalyseur à accumulation (27), à l'aide desquels on surveille la quantité de NOₓ adsorbée par le catalyseur à accumulation (27).

10. Procédé selon l'une quelconque des revendications 1 à 7, **caractérisé en ce que**, pour la détermination de l'état de charge de l'élément de catalyseur à accumulation (27), il est prévu un détecteur de NOₓ (32) qui communique avec les capteurs, qui est placé dans le courant de gaz d'échappement après l'élément de catalyseur à accumulation (27) et qui surveille la quantité de NOₓ sortant de l'élément de catalyseur à accumulation (27), une valeur maximale prédéterminée pour la quantité de NOₓ détectée étant associée à l'état de charge prédéterminé pour lequel la commutation se produit.

11. Procédé selon l'une quelconque des revendications 1 à 10, **caractérisé en ce que** l'on constate le temps de régénération de l'élément de catalyseur à accumulation (27) à l'aide de diagrammes caractéristiques, dans lesquels est stocké le temps de régénération en fonction de l'état de fonctionnement du moteur et de l'état de charge de l'élément de catalyseur à accumulation (27).

12. Procédé selon l'une quelconque des revendications 1 à 11,
**caractérisé en ce que** l'on surveille l'état de délestage de l'élément de catalyseur à accumulation (27) à l'aide de diagrammes caractéristiques, dans lesquels est stocké le temps de régénération pour un élément de catalyseur à accumulation (27) en fonction de l'état de fonctionnement du moteur et de l'état de charge de l'élément de catalyseur à accumulation (27).

13. Procédé selon l'une quelconque des revendications 1 à 12, **caractérisé en ce que** l'état de charge de l'élément de catalyseur à accumulation (27) au commencement d'une phase de fonctionnement pauvre résulte de l'état de charge au commencement d'une phase de fonctionnement riche par déduction du délestage pendant la phase de fonctionnement riche et **en ce que** l'état de charge au commencement d'une phase de fonctionnement riche résulte de l'état de charge au commencement d'une phase de fonctionnement pauvre par addition de la charge pendant la phase de fonctionnement pauvre, des diagrammes caractéristiques correspondants étant prévus pour la charge et pour le délestage.

14. Procédé selon l'une quelconque des revendications 1 à 13, **caractérisé en ce que**, pour la surveillance de la teneur en agents réducteurs dans le courant de gaz d'échappement après l'élément de catalyseur à accumulation, il est prévu au moins un détecteur d'agent réducteur (33), qui est conçu en tant que détecteur HC ou détecteur de CO ou sonde lambda.

15. Procédé selon la revendication 14, **caractérisé en ce que**, pour la surveillance de la teneur en agents réducteurs, le détecteur d'agent réducteur (33) est disposé entre l'élément de catalyseur à accumulation (27) et un élément de catalyseur DeNOₓ (29) placé après celui-ci.

16. Procédé selon l'une quelconque des revendications 1 à 15, **caractérisé en ce que**, pour la surveillance de la température des gaz d'échappement, il est prévu un capteur de température (30), qui est placé dans le courant de gaz d'échappement avant un élément de catalyseur à accumulation (27) traversé par les gaz d'échappement et qui communique avec l'ensemble de capteurs.

17. Procédé selon la revendication 16, **caractérisé en ce que**, pour la surveillance de la température des gaz d'échappement, le capteur de température (30) est placé entre l'élément de catalyseur à accumulation (27) et un élément de catalyseur (28) consommant de l'oxygène placé avant celui-ci dans le courant de gaz d'échappement, qui constitue en particulier un catalyseur d'oxydation.
